# EUROPÄISCHE PATENTSCHRIFT

(11) **EP 2 538 091 B1**
(45) Veröffentlichungstag und Bekanntmachung des Hinweises auf die Patenterteilung: **02.12.2015**
(21) Anmeldenummer: 10846245.8
(22) Anmeldetag: 29.12.2010
(51) Int. Cl.: F15D 1/08, F16J 12/00, B29C 47/12, B29C 47/30, B29C 47/92, B29C 47/00

(54) **VERFAHREN ZUR ÄNDERUNG DES WIDERSTANDES EINER FLÜSSIGKEIT UND GEFÄSS FÜR EINE FLÜSSIGKEIT**
METHOD FOR CHANGING THE RESISTANCE OF A LIQUID AND VESSEL FOR A LIQUID
PROCÉDÉ DE CHANGEMENT DE LA RÉSISTANCE D'UN LIQUIDE ET RÉCIPIENT POUR LIQUIDE

(30) Priorität: 16.02.2010 RU 2010105140
(43) Veröffentlichungstag der Anmeldung: 26.12.2012
(73) Patentinhaber: Kurasov, Alexandr Nikolayevich, Penza 440062 (RU)
(72) Erfinder: Kurasov, Alexandr Nikolayevich, Penza 440062 (RU)
(74) Vertreter: Jeck, Anton
(86) Internationale Anmeldenummer: PCT/RU2010/000800
(87) Internationale Veröffentlichungsnummer: WO 2011/102751

(56) Entgegenhaltungen:
- EP-A2- 0 158 814
- FR-A1- 2 427 897
- FR-A1- 2 570 323
- RU-C1- 2 172 115
- RU-C1- 2 185 286
- SU-A- 210 356
- US-A- 3 231 197
- US-A- 3 477 097
- US-A- 3 706 827
- US-A- 4 410 477
- US-A- 4 422 842
- US-A1- 2004 085 401
- US-B1- 6 644 845

## Beschreibung

Die Erfindung betrifft ein Verfahren zur Widerstandsänderung einer Flüssigkeit nach dem Oberbegriff des Anspruchs 1 und einen Behälter für die Flüssigkeit nach dem Oberbegriff der Ansprüche 2 bis 6.

Durch FR 2 570 323 A1 und durch US 6,644,845 ist jeweils ein Verfahren zur operativen Veränderung des hydraulischen Widerstands einer Flüssigkeit am Ausgang aus einem Behälter für die Flüssigkeit, die sich unter Druck befindet bekannt. Am Ausgang aus dem Behälter ist ein zusätzlicher Behälter aufgestellt, der in Form einer Arbeitskamera mit sich änderndem Volumen mit einer oder mehreren Abschlussöffnungen versehen ist. Das Volumen des zusätzlichen Behälters wird je nach dem Volumen der Flüssigkeit, die in der Arbeitskamera des zusätzlichen Behälters enthalten ist, oder je nach Veränderung der physischen Parameter des Prozesses oder entsprechend dem aufgegebenen Programm geändert.

Darüber hinaus ist durch FR 2 570 323 A1 und durch US 6,644,845 jeweils ein Behälter für eine Flüssigkeit bekannt, die sich unter Druck befindet. Der Behälter umfasst einen zusätzlichen Behälter am Ausgang aus dem Behälter, der mindestens eine Abschlussöffnung aufweist. Der erwähnte zusätzliche Behälter ist in Form einer Arbeitskamera mit sich änderndem Volumen ausgebildet.

Die Erfindungen (das Verfahren und der Behälter) sind auf dem Gebiet der Druckbehälter einsetzbar und betreffen die Konstruktion eines Flüssigkeitsbehälters, wobei sich die Flüssigkeit unter Druck im Betrieb dieses Behälters befindet, sowie ein Änderungsverfahren des hydraulischen Widerstands der Flüssigkeit am Ausgang des Behälters. Ein solcher Behälter kann zum Beispiel in einem Brennstoffsystem mit einer Brennkammer oder in verschiedenen Pressen, einschließlich Schneckenpressen sein, in denen sich ein gepresstes Material in Form einer nichtnewtonschen, d. h. viskoelastischen, Flüssigkeit befindet.

Es ist Aufgabe der Erfindung, ein Verfahren und einen Behälter zu entwickeln und den Prozess des Flüssigkeitsablaufs aus dem Behälter unter Druck operativ zu betätigen, die geometrischen Charakteristiken der Abschlussöffnung nicht zu ändern und nur den hydraulischen Widerstand des Flüssigkeitsstroms zu ändern, der die gegebene Einrichtung durchläuft.

Aus der Patentliteratur ist ein Verfahren zur Regulierung der Widerstandskraft eines hydraulischen Dämpfers in der Aufhängung eines Beförderungsmittels bekannt (Patent der Russischen Föderation N°2127675 nach KI. F16F9/48, 1999). Das Verfahren besteht darin, dass außer der Veränderung eines Durchgangsquerschnitts eines Kanals, der die Dämpferhöhlen je nach dem Druckunterschied zwischen diesen Höhlen verbindet, die Bewegung eines Dämpfungskolbens in die Umstellung eines Dämpfungsdetails umgewandelt wird, dessen Lage die Größe des Durchgangsquerschnitts des Kanals beeinflusst. Das Verfahren löst die Aufgabe einer automatischen Veränderung im großen Rahmen der Charakteristik des Dämpferwiderstands je nach der Amplitude der Ungleichmäßigkeit der Straßendeckschicht.

Das Verfahren einer operativen Veränderung des hydraulischen Widerstands der Flüssigkeit am Ausgang aus einem Flüssigkeitsbehälter, wobei die Flüssigkeit unter Druck steht, ist als solches im untersuchten Umfang der Informationsquellen nicht aufgedeckt worden. Betreffs des hydraulischen Widerstands als einer Erscheinung, die in einem beliebigen hydraulischen System existiert, ist es allgemein bekannt, dass sich dieses mit der Vergrößerung der Zahl der Hindernisse vergrößert, die auf dem Wege des Flüssigkeitsstroms gestellt sind. Die Hindernisse für den Flüssigkeitsstrom werden von der Reihenfolge der Volumen und der sie verbindenden Öffnungen gebildet. Gewöhnlich wird das Vorhandensein solcher Hindernisse als ein Mangel des hydraulischen Systems anerkannt, deshalb wird versucht, sie zu entfernen (siehe zum Beispiel das Verfahren der Senkung des hydraulischen Widerstands nach dem Patent der Russischen Föderation J.168108, KI. F17D 1/16, 2000).

Das angebotene Verfahren ist auf einer absichtlichen Bildung von Hindernissen auf dem Weg des Flüssigkeitsstroms und der Nutzung dieser Methode am Ausgang aus dem Behälter für die Erreichung einer positiven Wirkung nach der Betätigung des hydraulischen Widerstands begründet, was besonders aktuell für Stoffe gilt, die sich ändernde Eigenschaften haben. Bei einem niedrigen Druck, sogar bei einer sehr hohen Temperatur, sind sie fest und können mit Gieß- oder Thermoplastextrudierverfahren unter dem Druck nicht verarbeitet werden. Ein Grund der Schwierigkeiten einer einfachen Druckerhöhung im verschärfenden Behälter unter dem Druck ist die Herstellungs- und Betriebskomplexität einer sehr genauen Ausrüstung aus sehr festen Stoffen, die man unmöglich ohne schnellen Abrieb betreiben kann, einschließlich einer thermischen Deformation und einer hohen Reibung. Eine Unmöglichkeit zur Produktionsherstellung ist ausreichend vorhanden und führt zu viel zu hohen Selbstkosten. Die Forderungen sind dabei im Bezug zum Rohstoff, an die Arbeiter und den Zustand der Ausrüstung sehr hoch. Sogar kleine Abriebe bringen eine Betriebsunfähigkeit der Ausrüstung, da sie Arbeitsparameter nicht gewährleistet. Insbesondere fordert die Herstellung der Kunststoffe mit einer hohen Schmelztemperatur oder die Einspritzung eines Brennstoffs in eine Brennkammer von Motoren eine sehr genaue Detail- und Stoffherstellung der hohen Haltbarkeit. Ein großes Problem besonders beim Stoffumpumpen, wobei die Stoffe unter dem Druckeinfluss ihre Phase von der festen in die flüssige ändern, ist das erste Ausgangsproblem der unter dem Druckeinfluss die noch nicht weiche Flüssigkeit. Zu diesem Moment ist der Ausgang einer noch nicht flüssigen, sondern einer festen aber bröckeligen Masse nur bei einem ausreichend niedrigen Ausgangswiderstand möglich. Aber mit einer allmählichen Plastizitätserhöhung fängt der feste Körper an, sich in Flüssigkeit zu verwandeln, und für die Fortsetzung des Prozesses sind die Druckerhöhung und die entsprechende Änderung des hydraulischen Widerstands am Ausgang nötig.

Deshalb ist ein einfaches und billiges Verfahren zur Erhöhung und zur Veränderung des Drucks für die Flüssigkeit, die aus dem Behälter unter Druck herausläuft, sowohl ökonomisch als auch technologisch sehr aktuell. Dies lässt zu, die Ausrüstung mit einer kleineren Genauigkeit aus billigeren Stoffen herzustellen und dabei vielfach die Nutzungsdauer zu verlängern, wobei der Druck abstimmbar ist, der für die Arbeit mittels einer Veränderung des hydraulischen Widerstands für die herauslaufende Flüssigkeit notwendig ist.

Ein technisches Ergebnis der Erfindung (des Verfahrens) ist die Möglichkeit, eine Ausrüstung, die für die Verwirklichung des gegebenen Verfahrens vorbestimmt ist, mit einer kleineren Genauigkeit aus billigeren Stoffen herzustellen und dabei vielfach ihre Nutzungsdauer zu verlängern, wobei der Druck abstimmbar ist, der für die Arbeit mittels einer Veränderung des hydraulischen Widerstands für die herauslaufende Flüssigkeit notwendig ist.

Das angegebene technische Ergebnis wird dadurch erreicht, dass in dem Verfahren der operativen Veränderung des hydraulischen Widerstands der Flüssigkeit am Ausgang aus dem Flüssigkeitsbehälter, wobei sich die Flüssigkeit unter Druck befindet, am Ausgang aus dem Behälter ein zusätzlicher Behälter angeordnet wird, der in Form einer Arbeitskamera eines geänderten Volumens mit einer oder mehreren Abschlussöffnungen versehen ist, wobei das Volumen des angegebenen zusätzlichen Behälters je nach dem Volumen der Flüssigkeit geändert wird, die in der Arbeitskamera des zusätzlichen Behälters enthalten ist, oder je nach der Veränderung der physischen Parameter des Prozesses oder entsprechend dem aufgegebenen Programm. Dabei wird das Volumen des angegebenen zusätzlichen Behälters zum Beispiel mit Hilfe einer darin angeordneten beweglichen Scheidewand geändert, die in axialer Richtung versetzt wird.

Es ist ein Behälter für die Flüssigkeit bekannt, wobei sich die Flüssigkeit unter Druck befindet, der mit einem zusätzlichen Behälter am Ausgang aus dem Behälter versorgt ist, der mindestens eine Abschlussöffnung hat (siehe zum Beispiel das Patent der Russischen Föderation Nº 2172115, KI. B29 C 47/30, 2001). Der angegebene Behälter stellt einen Extruderkörper dar, der mit einem zusätzlichen Behälter an seinem Ausgang versorgt ist. Ein Mangel eines solchen Behälters ist, dass der erwähnte zusätzliche Behälter an seinem Ausgang ein ständiges Volumen hat. In diesem Zusammenhang entstehen große Probleme, besonders bei der Arbeit mit Stoffen, die laut einem technologischen Prozess unter Einwirkung eines hohen Drucks aus einer festen Phase in eine flüssige Phase übergehen. Im ersten Moment ist der Ausgang eines solchen Stoffs aus dem Behälter in der Art einer noch nicht weichen, bröckeligen Masse nur bei einem ausreichend niedrigen Widerstand (Druck) am Ausgang möglich. Aber mit einer allmählichen Plastizitätserhöhung, wenn der feste Körper anfängt sich in Flüssigkeit zu verwandeln, ist für die Fortsetzung des Prozesses eine Erhöhung des Widerstands (des Drucks) am Ausgang nötig.

Am Beispiel eines Presse-Extruders wird der vorliegende Mangel näher betrachtet. In diesem Fall wird ein Behälter für die Flüssigkeit, die sich unter Druck befindet, der Extruderkörper sein, der mit dem Extrudat gefüllt. Ist.

Gemäß dem existierenden Patent ist der zusätzliche Behälter am Ausgang aus dem Extruderkörper im Druck und im Produktverbrauch quasi stabilisiert. Jedoch geschieht beim Start und im Ablaufzustand das Folgende. Beim Treffen der Masse in den ersten zusätzlichen Behälter sowie in den zweiten und die nachfolgenden zusätzlichen Behälter (bei Vorhandensein von diesen) geschieht im ersten Moment im Zusammenhang mit einem heftigen Druckabfall am Ausgang des Extruders (da die zusätzlichen Behälter in diesem Moment leer sind) ein heftiger Abfall der Plastizität der Masse. Die Masse, manchmal zu fest werdend, verstopft die Ausgangsöffnung einer Ziehdüse und beendet den gerade anfangenden Prozess. Je größer das Volumen des zusätzlichen Behälters ist, desto höher ist die Wahrscheinlichkeit der Verstopfung, und bei einem bestimmten Volumen ist der Start im Grunde genommen unmöglich. Daher ist die Arbeit mit zwei, drei zusätzlichen Behältern entlang der Achse des Extruders auch tatsächlich unrealisierbar.

Aber sogar nach einem erfolgreichen Start ist ein anderes Problem feststellbar: Da das Volumen des zusätzlichen Behälters fest vorgegeben ist, so ist ein Nachregeln seines hydraulischen Widerstands für die Bildung optimaler Extrusionsbedingungen auf dem bestimmten Regime unmöglich. Meistens wird der Mangel dieses Volumens während des bestimmten Prozesses beobachtet, da beim Start ein niedriger Widerstand gefordert wurde, und im bestimmten Regime ist er ungenügend.

Ein technisches Ergebnis der Erfindung (des Behälters) ist die Möglichkeit einer gleichmäßigen Veränderung des hydraulischen Widerstands für die Flüssigkeit (echt oder viskoelastisch), die unter dem Druck aus der Behälteröffnung mittels einer gleichmäßigen Veränderung des Volumens des zusätzlichen Behälters (der zusätzlichen Behälter) herausläuft.

Das angegebene technische Ergebnis wird dadurch erreicht, dass im Behälter für die Flüssigkeit, die sich unter Druck befindet, versorgt mit einem zusätzlichen Behälter am Ausgang aus dem Behälter, mindestens eine Abschlussöffnung vorgesehen ist. Der erwähnte zusätzliche Behälter ist in Form einer Arbeitskamera mit geändertem Volumen ausgebildet. Dabei kann der erwähnte zusätzliche Behälter am Ausgang aus dem Behälter geteilt sein. Der zusätzliche Behälter besteht aus einem bewegungsunfähigen Element, das unmittelbar an den Behälter für die Flüssigkeit angeschlossen ist, einem in der axialen Richtung beweglichen Element mit einer oder mehreren Abschlussöffnungen und einer diese Elemente verbindenden hohlen, vorzugsweise Monozelle, die eine bewegliche Verbindung mindestens mit einem der erwähnten Elemente des zusätzlichen Behälters hat, wobei die erwähnten Elemente untereinander teleskopierbar verbunden sind. Der erwähnte zusätzliche Behälter am Ausgang aus dem Behälter kann geteilt sein und besteht aus einem bewegungsunfähigen Element, das unmittelbar an den Behälter für die Flüssigkeit angeschlossen ist, einem in der axialen Richtung beweglichen Element mit einer oder mehreren Abschlussöffnungen, die in einer beweglichen Scheidewand erfüllt sind, die in diesem Element angeordnet ist, und einer diese Elemente verbindenden in axialer Richtung beweglichen hohlen, vorzugsweise Monozelle, die eine bewegliche Verbindung mit jedem der erwähnten Elemente des zusätzlichen Behälters hat und die mit der beweglichen Scheidewand mit einer oder mehreren Durchgangsöffnungen versorgt ist, wobei die erwähnten Elemente untereinander teleskopierbar verbunden sind.

Noch eine der Modifikationen des erklärten Behälters für die Flüssigkeit, die sich unter Druck befindet, ist eine solche, in der der erwähnte zusätzliche Behälter am Ausgang aus dem Behälter geteilt ist und aus einem bewegungsunfähigen Element besteht, das unmittelbar an den Behälter angeschlossen ist, oder einem in der axialen Richtung beweglichen Element, das ins Netz am Ausgang aus dem Behälter eingestellt ist, mit einer oder mehreren Durchgangsöffnungen und einem folgenden in axialer Richtung beweglichen Element mit einer oder mehreren Abschlussöffnungen, das mit dem erwähnten bewegungsunfähigen oder erwähnten beweglichen Element zusammenwirkt, wobei die erwähnten Elemente untereinander teleskopierbar verbunden sind. Dabei kann an das letzte Element mindestens noch ein in axialer Richtung bewegliches Element mit einer oder mehreren Abschlussöffnungen angeschlossen sein.

Eine weitere Modifikation des erklärten Behälters für die Flüssigkeit, die sich unter Druck befindet, ist eine solche, in der der erwähnte zusätzliche Behälter am Ausgang aus dem Behälter geteilt ist und aus einem beweglichen oder bewegungsunfähigen Element besteht, das unmittelbar an den Behälter für die Flüssigkeit angeschlossen ist, einem in axialer Richtung beweglichen Element mit einer oder mehreren Abschlussöffnungen und einer diese Elemente verbindenden in axialer Richtung beweglichen hohlen, vorzugsweise Monozelle, die eine bewegliche Verbindung mit jedem der erwähnten Elemente des zusätzlichen Behälters aufweist, wobei diese Elemente untereinander teleskopierbar verbunden sind. Dabei kann an das letzte Element mindestens noch ein in der axialen Richtung bewegliches Element mit einer oder mehreren Abschlussöffnungen angeschlossen sein. Die vorliegende Modifikation des Behälters sieht das Ansetzen eines geteilten Behälters theoretisch "bis ins Unendliche" vor.

Schließlich ist eine solche Modifikation des Behälters für die Flüssigkeit möglich, die sich unter Druck befindet, in der der erwähnte zusätzliche Behälter am Ausgang aus dem Behälter geteilt ist und aus einem beweglichen oder bewegungsunfähigen Element besteht, das unmittelbar an den Behälter für die Flüssigkeit angeschlossen ist, einem in axialer Richtung beweglichen Element mit einer oder mehreren Durchgangsöffnungen, wobei diese Elemente untereinander teleskopierbar verbunden sind. Dabei kann an das letzte Element teleskopierbar oder mit Hilfe einer Monozelle mindestens noch ein in axialer Richtung bewegliches Element mit einer oder mehreren Abschlussöffnungen angeschlossen sein.

Die Erfindung wird anhand der Zeichnungen näher erläutert. Es zeigen:
- Fig. 1: den Längsschnitt einer Elementarmodifikation des Behälters für die Flüssigkeit, die sich unter Druck befindet, mit einer willkürlichen Zahl von Abschlussöffnungen,
- Fig. 2: den Längsschnitt des Behälters für die Flüssigkeit, die sich unter Druck befindet, mit einem zusätzlichen Behälter, der ein in axialer Richtung bewegliches Element und Elemente einer automatischen und halbautomatischen Regulierung aufweist, sowie mit der äußerlichen Anordnung eines Anschlusselements,
- Fig. 3: den Längsschnitt des Behälters für die Flüssigkeit, die sich unter Druck befindet, mit einer inneren Anordnung eines Anschlusselements,
- Fig. 4: den Längsschnitt des Behälters für die Flüssigkeit, die sich unter Druck befindet, mit einem zusätzlichen Behälter, der mit einer Scheidewand versehen ist,
- Fig. 5: den Längsschnitt einer solchen Modifikation des erklärten Behälters, die das Ansetzen eines zusätzlichen Behälters theoretisch "bis ins Unendliche" vorsieht, und
- Fig. 6: den Längsschnitt einer solchen Modifikation des erklärten Behälters, in der alle Elemente des zusätzlichen Behälters gegenseitig beweglich sind.

Das erklärte Verfahren der operativen Veränderung des hydraulischen Flüssigkeitswiderstands am Ausgang aus dem Behälter für die Flüssigkeit, die sich unter Druck befindet, wird mit Hilfe des nachstehend beschriebenen Behälters für die Flüssigkeit verwirklicht.

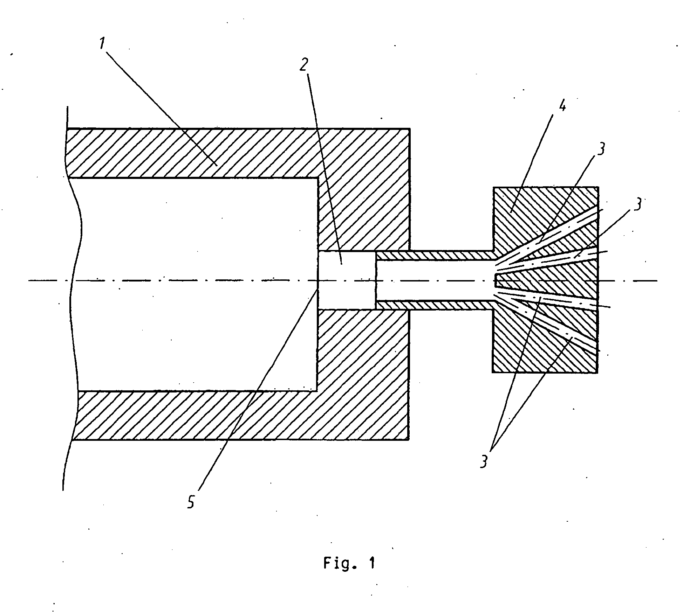

In Fig. 1 ist eine prinzipielle Konstruktion des erklärten Behälters schematisch dargestellt, laut dem ein Behälter 1 für die Flüssigkeit, die sich unter Druck befindet, mit einem zusätzlichen Behälter 2 versorgt ist. Der zusätzliche Behälter 2 ist mindestens mit einer Abschlussöffnung 3 versorgt, die im Knoten 4 gebildet ist, und am Ausgang 5 aus dem Behälter 2 liegt. In der Fig.1 ist die Modifikation des erklärten Behälters mit einigen Ausgangsöffnungen dargestellt.

Entsprechend dem Ziel der Erfindung ist der erwähnte zusätzliche Behälter 2 in Form von einer Arbeitskamera ausgebildet, deren Volumen mittels einer axialen Verstellung des Knotens 4 bezüglich des Behälters 1 verändert werden kann.

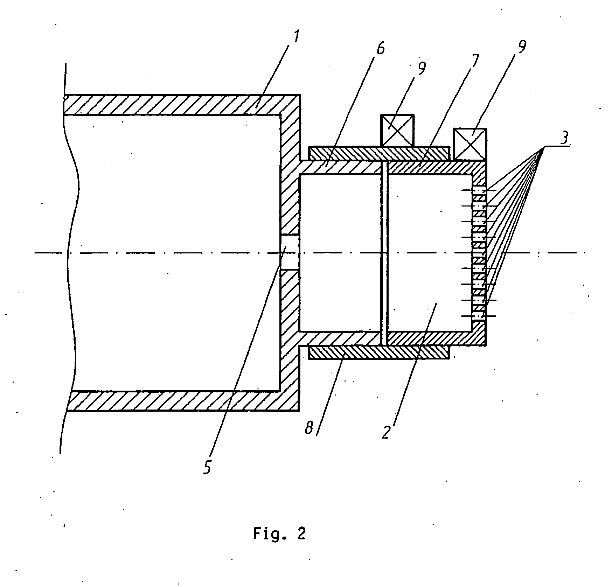

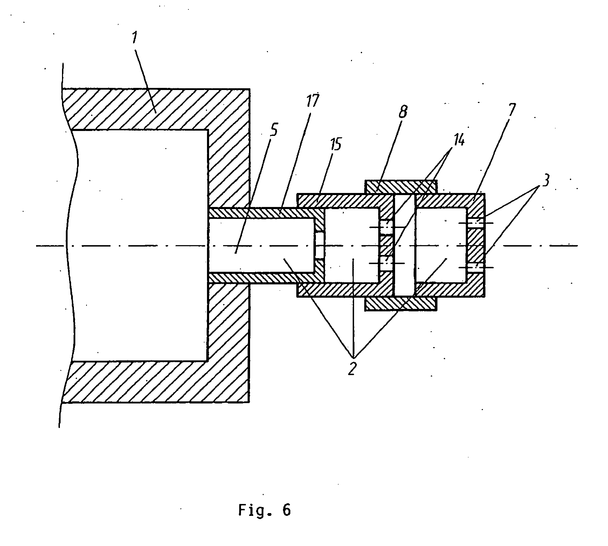

In den Figuren 2 - 6 sind mögliche konstruktive Varianten des erklärten Behälters für die Flüssigkeit dargestellt, die sich unter Druck befindet, die in verschiedenen Richtungen die oben beschriebene und in der Fig.1 vorgestellte prinzipielle Konstruktion des erklärten Behälters für die Flüssigkeit weiterentwickeln. Diese Varianten werden damit charakterisiert, dass in jeder von ihnen der erwähnte zusätzliche Behälter 2, der am Ausgang 5 aus dem Behälter 1 liegt, geteilt ist.

So besteht in der Konstruktion, die in der Fig. 2 dargestellt ist, der erwähnte zusätzliche Behälter 2 aus einem bewegungsunfähigen Element 6, das unmittelbar an den Behälter 1 für die Flüssigkeit angeschlossen ist, einem in axialer Richtung beweglichen Element 7 mit einer oder mehreren Abschlussöffnungen 3 und einer diese Elemente 6 und 7 verbindenden hohlen, vorzugsweise Monozelle 8, die eine bewegliche Verbindung mindestens mit einem der erwähnten Elemente 6 und 7 des zusätzlichen Behälters 2 aufweist. Mit der Position 9 sind Elemente einer automatischen oder halbautomatischen Regulierung des Inhalts des Behälters 2 bezeichnet.

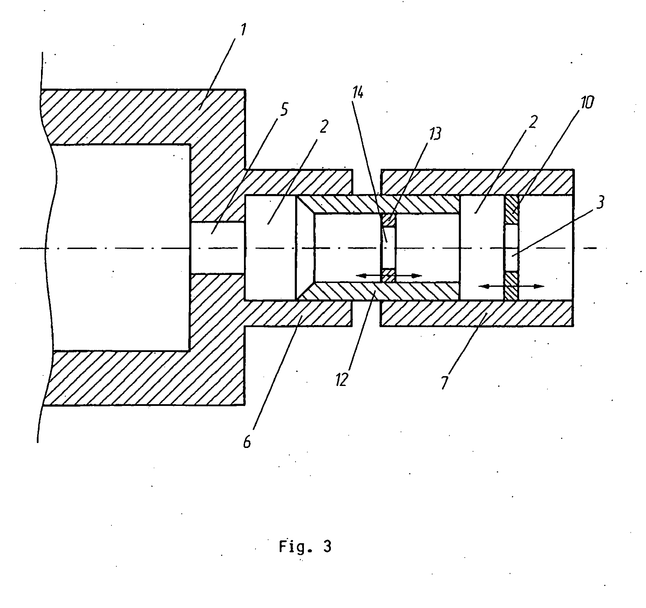

In der Konstruktion, die in der Fig.3 dargestellt ist, besteht der erwähnte zusätzliche Behälter 2 aus einem bewegungsunfähigen Element 6, das unmittelbar an den Behälter 1 angeschlossen ist, einem in axialer Richtung beweglichen Element 7 mit einer oder mehreren Abschlussöffnungen 3, die in einer beweglichen Scheidewand 10 vorgesehen sind, die in diesem Element 7 angeordnet ist, und einer diese Elemente 6 und 7 verbindenden hohlen, vorzugsweise Monozelle 12, die eine bewegliche Verbindung mit jedem der erwähnten Elemente 6 und 7 des zusätzlichen Behälters 2 aufweist und die mit einer beweglichen Scheidewand 13 mit einer oder mehreren Durchgangsöffnungen 14 versehen ist. Die erwähnten Elemente 6, 7 und 12 sind untereinander teleskopierbar verbunden.

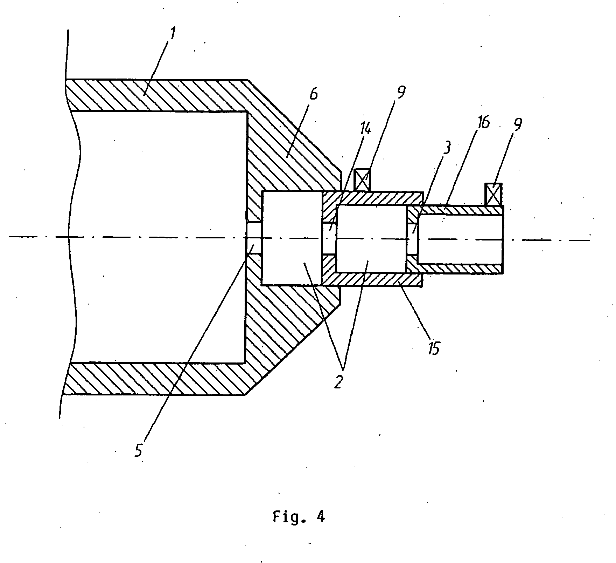

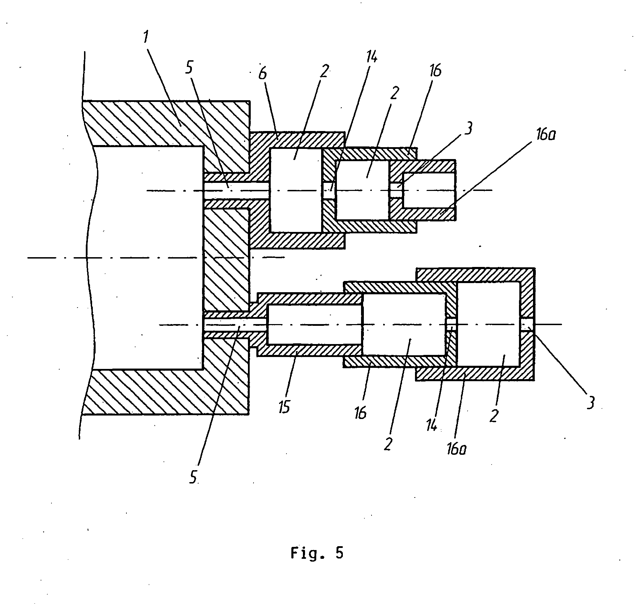

In der Konstruktion, die in den Fig. 4 und 5 dargestellt ist, besteht der erwähnte zusätzliche Behälter 2 aus einem bewegungsunfähigen Element 6, das unmittelbar an den Behälter 1 angeschlossen ist, oder einem in axialer Richtung beweglichen Element 15, das ins Netz am Ausgang aus dem Behälter 1 eingebaut ist, mit einer oder mehreren Durchgangsöffnungen 14 und einem folgenden in axialer Richtung beweglichen Element 16 mit einer oder mehreren Abschlussöffnungen 3, das mit dem erwähnten bewegungsunfähigen Element 6 oder dem erwähnten beweglichen Element 15 zusammenwirkt, wobei die erwähnten Elemente 6, 15 und 16 untereinander teleskopierbar verbunden sind. Dabei stellt die Fig. 5 die Konstruktion des erklärten Behälters 1 für die Flüssigkeit dar, der einige (in diesem Fall zwei) Ausgänge 5 entsprechend mit einigen (in diesem Fall mit zwei) geteilten zusätzlichen Behältern 2 haben kann. Dabei kann an das letzte bewegliche Element (16 in Fig. 4 oder 16a in Fig. 5) teleskopierbar oder mit Hilfe der Monozelle 8 oder 12 (siehe die Fig. 2 oder 3) mindestens noch ein in axialer Richtung bewegliches Element 7 mit einer oder mehreren Abschlussöffnungen 3 angeschlossen sein.

In der Konstruktion, die in der Fig. 3 dargestellt ist, besteht der erwähnte zusätzliche Behälter 2 aus dem beweglichen oder bewegungsunfähigen Element 17, das unmittelbar an den Behälter 1 für die Flüssigkeit angeschlossen ist, und dem in axialer Richtung beweglichen Element 15 mit einer oder mehreren Durchgangsöffnungen 14. Die Elemente 15 und 17 sind untereinander teleskopierbar verbunden. Dabei kann an das letzte Element 17 teleskopierbar oder mit Hilfe der Monozelle 8 mindestens noch ein in axialer Richtung bewegliches Element 7 mit einer oder mehreren Abschlussöffnungen 3 angeschlossen sein.

Eine praktische Anwendung des erklärten Behälters für die Flüssigkeit, die sich unter Druck befindet, wird in einem Beispiel eines Presse-Extruderlaufs betrachtet. Wie oben angegeben ist, wird in diesem Fall ein Behälter für die Flüssigkeit, die sich unter Druck befindet, der Extruderkörper, mit einem Extrudat gefüllt. Bis zum Anfang des Extrusionsprozesses (siehe zum Beispiel die Fig. 2) kann man das Volumen des zusätzlichen Behälters 2 am Ausgang 5 des Extruders (des Behälters 1) minimieren, das bewegliche Element 7 wird dicht an das bewegungsunfähige Element 6 herangerückt, und wenn es bewegliche Scheidewände 10 und 13 gibt (siehe Fig. 3), können sie für die Minimierung ihres Einflusses auf den hydraulischen Widerstand des zusätzlichen Behälters 2 auch geschoben werden. Nachdem die ausgepresste Flüssigkeit (das Extrudat) stabil aus der Düsenmatrize (der Abschlussöffnungen 3 des zusätzlichen Behälters 2) hinauszugehen beginnt, wird das bewegliche Element 7 für die Erreichung der notwendigen physischen Parameter des Ausflussprozesses der Flüssigkeit (des Extrusionsprozesses) mittels einer Veränderung des hydraulischen Widerstands des zusätzlichen Behälters 2 vom bewegungsunfähigen Element 6 nach rechts geschoben. So wird die Veränderung des hydraulischen Widerstands im System mittels einer Längenveränderung und entsprechend des Volumens des zusätzlichen Behälters 2 zwischen dem Extruderkörper (dem Behälter 1) mit der Öffnung für den Ausgang 5 und der Düsenmatrize (den Abschlussöffnungen 3) erreicht, sowie notfalls mittels der Verstellung der Scheidewände 10 und 13 innerhalb des zusätzlichen Behälters 2 (siehe Fig. 3).

Wie aus der oben vorgestellten Beschreibung des erklärten Behälters für die Flüssigkeit folgt, die sich unter Druck befindet, besteht das erklärte Verfahren der operativen Veränderung des hydraulischen Widerstands der Flüssigkeit am Ausgang 5 aus dem Behälter 1 für die Flüssigkeit, die sich unter Druck befindet (siehe zum Beispiel die Fig. 2) darin, dass am Ausgang 5 aus dem Behälter 1 der zusätzliche Behälter 2 angeordnet wird, der in Form von einer Arbeitskamera mit sich änderndem Volumen mit einer oder mehreren Abschlussöffnungen 3 versehen ist. Dabei wird das Volumen des angegebenen zusätzlichen Behälters 2 je nach dem Volumen der Flüssigkeit geändert, die in der Arbeitskamera des zusätzlichen Behälters 2 enthalten ist, oder je nach der Veränderung der physischen Parameter des Prozesses, oder entsprechend dem aufgegebenen Programm (in der vorliegenden Anmeldung nicht entdeckt).

Außerdem kann man laut dem erklärten Verfahren der operativen Veränderung des hydraulischen Widerstands der Flüssigkeit am Ausgang 5 aus dem Behälter 1 für die Flüssigkeit, die sich unter Druck befindet (siehe zum Beispiel Fig. 3) das Volumen des angegebenen zusätzlichen Behälters 2 mit Hilfe der darin aufgestellten beweglichen Scheidewand 10 und (oder) 13 ändern, die in axialer Richtung versetzt wird.

Unten werden Beispiele des erklärten Verfahrens in Bezug auf den Extrudierprozess angeführt.

### Beispiel 1

Vor dem Start des Extruders wird das Düsenelement (das bewegliche Element 7) möglichst nahe an den Extruderkörper (den Behälter 1) herangerückt. In dieser Lage ist der hydraulische Widerstand am Ausgang 5 des Behälters 1 minimal. Es wird das Starten des Extruders vollzogen. Nachdem die physischen Parameter und der Ausgang des Extrudats stabilisiert sind und die Gefahr einer Unterbrechung des Stroms des Extrudats, das die Düsen (die Abschlussöffnungen 3) durchläuft, vermieden ist, erscheint die Möglichkeit, den Druck im Extruder (im Behälter 1) mittels einer Veränderung der Entfernung genauer zu regulieren, und also das Volumen des zusätzlichen Behälters 2 (und als Folge die Veränderung des hydraulischen Widerstands) zu ändern. Die anderen Parameter des Extruders (des Behälters 1) und des technologischen Prozesses werden nicht geändert.

### Beispiel 2

Nach dem Start und der Stabilisierung eines technologischen Prozesses ist eine für die vorliegende Konstruktion maximale Entfernung zwischen dem Extruderkörper (dem Behälter 1) und dem Düsenelement (dem beweglichen Element 7) eingestellt: Der Druck im Extruder (im Behälter 1) wurde erhöht, aber ungenügend. Es wird die Entscheidung getroffen, die Scheidewände 10 und 13 (eine oder beide) in Richtung zum Ausgang 5 des Extruders (des Behälters 1) zu versetzen. Diese Handlung wird den hydraulischen Widerstand des Systems vergrößern und den Druck und die Temperatur im Extruder (im Behälter 1) ohne Veränderung anderer Parameter erhöhen.

### Beispiel 3

Im Extrusionsprozess wurden die Eigenschaften des Stoffs gewechselt. Der Stoff wurde weicher, und es bedarf einer Druck- und Temperaturverkleinerung. Entsprechend kann man die Länge des zusätzlichen Behälters 2 verringern oder, wenn Scheidewände 10 und 13 vorgesehen sind, sie so zu verschieben, dass ihr Einfluss auf den hydraulischen Widerstand sich verringert.

Der physische Sinn des Verfahrens und der Einrichtung besteht in der Möglichkeit einer gleichmäßigen Veränderung des hydraulischen Widerstands für die Flüssigkeit (echter oder elastoplastischer), die unter Druck aus der Öffnung des Behälters herausfließt. Die Veränderung des hydraulischen Widerstands tritt im Laufe des Ausfließprozesses auf. Insbesondere seine Vergrößerung trägt bei einer Vergrößerung des Volumens des zusätzlichen Behälters 2 (der zusätzlichen) und ihrer Zahl zur Druckvergrößerung im System der Behälter bei, also auch der Reibung in der Flüssigkeit und der Flüssigkeit mit der Einrichtung und demzufolge auch der Temperatur bei. Die Verkleinerung der Volumen und ihrer Zahl trägt zur Drucksenkung und demzufolge zur Reibung im System und der Temperatur bei. Dabei ist nicht erforderlich, andere physische Parameter der Einrichtung, einschließlich die Parameter des Antrieblaufs, zu ändern, was sehr bequem und billig ist, da die Arbeitsbedingungen des Systems gleichmäßig sind und sich notfalls je nach dem Zustand, insbesondere des Ausrüstungsverschleißes, verändern können. Die Druck- und Temperaturveränderung im System ist bei der Veränderung des Volumens der zusätzlichen Behälter nicht absolut sondern relativ gehalten und hängt in hohem Maße von der Charakteristik der Flüssigkeit ab. Je mehr die Flüssigkeit unecht ist und je mehr elastoplastische Eigenschaften die Flüssigkeit hat, desto stärker ist der Einfluss der Vergrößerung der Volumen und ihrer Zahl. Die Druckveränderung kann bis zu 1000 %, die Temperaturveränderung bis zu 500 % im Vergleich mit dem Behälter 1 ohne zusätzliche Behälter 2 sein.

Dabei gibt es eine Möglichkeit, im Extrusionsprozess das Volumen der zusätzlichen Behälter 2 innerhalb von 1,5- 2mal zu ändern oder bei anderen Konstruktionen bis zu 1000mal, tatsächlich von der Nullbedeutung bis zu 2000 ml. So kann man den Start des Prozesses auf ein minimales Volumen (Fig. 2) verwirklichen, was den Start und seine normalen Bedingungen - Schnelligkeit, Sauberkeit, Abwesenheit der Überlastungen der Ausrüstung - gewährleistet und je nach der Errichtung der Parameter des Prozesses ein optimales Volumen der zusätzlichen Behälter finden lässt.

Das angegebene Verfahren und die Einrichtung ermöglichen in Bezug auf den Extrusionsprozess eine Stoffüberarbeitung auf einer größeren Düsenfläche oder bei ihren größeren Zahlen (das heißt bei einer vergrößerten Düsenfläche) ohne Druckverlust im Extruder den Produktionsprozess zu intensivieren und die Produktivität der Ausrüstung zu erhöhen.

### Stand der Technik

RU 2127675, F1 6F9/48, 1999;
RU 2168108, KI. F17D1/16, 2000;
RU 21721 15, KI. B 29 C 47/30, 2001 (der Prototyp).

## Patentansprüche

1. Verfahren zur operativen Veränderung des hydraulischen Widerstands einer Flüssigkeit am Ausgang aus einem Behälter für die Flüssigkeit, die sich unter Druck befindet, wobei:
- am Ausgang (5) aus dem Behälter (1) ein zusätzlicher Behälter (2) aufgestellt wird, der in Form einer Arbeitskamer mit sich änderndem Volumen mit einer oder mehreren Abschlussöffnungen (3) versehen ist,
- das Volumen des zusätzlichen Behälters (2) je nach dem Volumen der Flüssigkeit, die in der Arbeitskamer des zusätzlichen Behälters (2) enthalten ist, oder je nach Veränderung der physischen Parameter des Prozesses oder entsprechend dem aufgegebenen Programm geändert wird,
**dadurch gekennzeichnet,**
**dass** das Volumen des angegebenen zusätzlichen Behälters (2) mit Hilfe der in axialer Richtung beweglichen Elemente des zusätzlichen Behälters In geteilter Ausführung gemäß den vorliegenden Ansprüchen 2 bis 6, beispielsweise mit Hilfe einer darin angeordneten beweglichen Scheidewand (10) geändert wird, die in axialer Richtung versetzt wird.

2. Behälter für eine Flüssigkeit, die sich unter Druck befindet, mit einem zusätzlichen Behälter (2) am Ausgang (5) aus dem Behälter (1), der mindestens eine Abschlussöffnung (3) aufweist, wobei der erwähnte zusätzliche Behälter (2) in Form einer Arbeitskamer mit sich änderndem Volumen ausgebildet ist, **dadurch gekennzeichnet,**
**dass** der erwähnte zusätzliche Behälter (2) am Ausgang (5) aus dem Behälter (1) geteilt ist und aus einem bewegungsunfähigen Element (6) besteht, das unmittelbar an den Behälter (1) für die Flüssigkeit angeschlossen ist,
**dass** ein in axialer Richtung bewegliches Element (7) mit einer oder mehreren Abschlussöffnungen (3) und eine diese Elemente (6, 7) verbindenden hohlen, vorzugsweise Monozelle (9) vorgesehen ist, die eine bewegliche Verbindung mindestens mit einem der erwähnten Elemente (6, 7) des zusätzlichen Behälters (2) hat, wobei die erwähnten Elemente (6, 7) untereinander teleskopierbar verbunden sind.

3. Behälter für eine Flüssigkeit, die sich unter Druck befindet, mit einem zusätzlichen Behälter (2) am Ausgang (5) aus dem Behälter (1), der mindestens eine Abschlussöffnung (3) aufweist, wobei der erwähnte zusätzliche Behälter (2) in Form einer Arbeitskamer mit sich änderndem Volumen ausgebildet ist,
**dadurch gekennzeichnet,**
**dass** der erwähnte zusätzliche Behälter (2) am Ausgang (5) aus dem Behälter (1) geteilt ist und aus einem bewegungsunfähigen Element (6) besteht, das unmittelbar an den Behälter (1) für die Flüssigkeit angeschlossen ist,
**dass** ein in axialer Richtung bewegliches Element (7) mit einer oder mehreren Abschlussöffnungen (3) vorgesehen ist, die in einer Scheidewand (10) ausgebildet und in diesem Element (7) angeordnet sind, und
**dass** eine diese Elemente verbindende in axialer Richtung bewegliche hohle, vorzugsweise Monozelle (12) vorgesehen ist, die eine bewegliche Verbindung mit jedem der erwähnten Elemente (6 und 7) des zusätzlichen Behälters (2) aufweist und die mit der beweglichen Scheidewand (10) mit einer oder mehreren Durchgangsöffnungen (14) versehen ist, wobei diese Elemente (6 und 7) untereinander teleskopierbar verbunden sind.

4. Behälter für eine Flüssigkeit, die sich unter Druck befindet, mit einem zusätzlichen Behälter (2) am Ausgang (5) aus dem Behälter (1), der mindestens eine Abschlussöffnung (3) aufweist, wobei der erwähnte zusätzliche Behälter (2) in Form einer Arbeitskamer mit sich änderndem Volumen ausgebildet ist, **dadurch gekennzeichnet,**
**dass** der zusätzliche Behälter (2) am Ausgang (5) aus dem Behälter (1) geteilt ist und aus einem bewegungsunfähigen Element (6) besteht, das unmittelbar an den Behälter (1) angeschlossen ist, oder aus einem in axialer Richtung beweglichen Element (15) besteht, das ins Netz am Ausgang (5) aus dem Behälter (1) angeordnet ist, mit einer oder mehreren Durchgangsöffnungen (14) und einem folgenden in axialer Richtung beweglichen Element (16) mit einer oder mehreren Abschlussöffnungen (3), das mit dem erwähnten bewegungsunfähigen Element (6) oder dem erwähnten beweglichen Element (15) zusammenwirkt, wobei die erwähnten Elemente (6, 15, 16) untereinander teleskopierbar verbunden sind und
**dass** dabei an das letzte Element (16) mindestens noch ein in axialer Richtung bewegliches Element (7) mit einer oder mehreren Abschlussöffnungen (3) angeschlossen ist.

5. Behälter für eine Flüssigkeit die sich unter Druck befindet, mit einem zusätzlichen Behälter (2) am Ausgang (5) aus dem Behälter (1), der mindestens eine Abschlussöffnung (3) aufweist, wobei der erwähnte zusätzliche Behälter (2) in Form einer Arbeitskamer mit sich änderndem Volumen ausgebildet ist,
**dadurch gekennzeichnet,**
**dass** der erwähnte zusätzliche Behälter (2) am Ausgang (5) aus dem Behälter (1) geteilt ist und aus einem beweglichen oder bewegungsunfähigen Element (17) besteht, das unmittelbar an den Behälter (1) für die Flüssigkeit angeschlossen ist,
**dass** ein in axialer Richtung bewegliches Element (15) mit einer oder mehreren Durchlassöffnungen (14) und einer diese Elemente (15, 17) verbindenden in axialer Richtung beweglichen hohlen, vorzugsweise Monozelle (9) vorgesehen ist, die eine bewegliche Verbindung mit jedem der erwähnten Elemente (15, 17) des zusätzlichen Behälters (2) aufweist, wobei diese Elemente (15, 17) untereinander teleskopierbar verbunden sind und
**dass** an das letzte Element (17) mindestens noch ein in axialer Richtung bewegliches Element (7) mit einer oder mehreren Abschlussöffnungen (3) angeschlossen ist.

6. Behälter für eine Flüssigkeit, die sich unter Druck befindet, mit einem zusätzlichen Behälter (2) am Ausgang (5) aus dem Behälter (1), der mindestens eine Abschlussöffnung (3) aufweist, wobei der erwähnte zusätzliche Behälter (2) in Form einer Arbeitskamer mit sich änderndem Volumen ausgebildet ist, **dadurch gekennzeichnet,**
**dass** der erwähnte zusätzliche Behälter (2) am Ausgang (5) aus dem Behälter (1) geteilt ist und aus einem beweglichen oder bewegungsunfähigen Element (17), das unmittelbar an den Behälter (1) für die Flüssigkeit angeschlossen ist, und einem in axialer Richtung beweglichen Element (15) mit einer oder mehreren Durchgangsöffnungen (14) besteht, wobei diese Elemente (15, 17) untereinander teleskopierbar verbunden sind und
**dass** an das letzte Element (15) teleskopierbar oder mit Hilfe eines Zylinderelements (8) mindestens noch ein in axialer Richtung bewegliches Element (7) mit einer oder mehreren Abzugsöffnungen (3) angeschlossen ist.

## Claims

1. A method for the operational change of the hydraulic resistance of a liquid at the outlet from a container for the liquid, which is under pressure, wherein:
- at the outlet (5) from the container (1) an additional container (2) is situated, which is provided in the form of a working chamber with changing volumes with one or several end openings (3),
- the volume of the additional container (2) is changed depending on the volume of the liquid, which is contained in the working chamber of the additional container (2), or depending on the change of the physical parameters of the process or according to the discontinued program,
**characterized in**
**that** the volume of the indicated additional container (2) is changed with the aid of the elements of the additional container moving in the axial direction in split design according to the present claims 2 to 6, for example, with the aid of a moving partition (10) arranged therein, which is offset in the axial direction.

2. A container for a liquid, which is under pressure, with an additional container (2) at the outlet (5) from the container (1), which has at least one end opening (3), wherein the mentioned additional container (2) is designed in the form of a working chamber with changing volume,
**characterized in that** the mentioned additional container (2) is split at the outlet (5) from the container (1) and consists of an immobilized element (6), which is connected directly to the container (1) for the liquid,
that an element (7) moving in the axial direction is provided with one or several end openings (3) and a hollow, preferably mono-cell (9) connecting these elements (6, 7), which mono-cell has a moving connection at least with one of the mentioned elements (6, 7) of the additional container (2), wherein the mentioned elements (6, 7) are connected telescopically with each other.

3. A container for a liquid, which is under pressure, with an additional container (2) at the outlet (5) from the container (1), which has at least one end opening (3), wherein the mentioned additional container (2) is designed in the form of a working chamber with changing volumes,
**characterized in**
**that** the mentioned additional container (2) is split at the outlet (5) from the container (1) and consists of an immobilized element (6), which is connected directly to the container (1) for the liquid,
**that** an element (7) moving in the axial direction is provided with one or several end openings (3), which are formed in a partition (10) and are arranged in this element (7), and
**that** a hollow, preferably mono-cell (12) moving in the axial direction is provided connecting these elements, which mono-cell has a moving connection with each of the mentioned elements (6 and 7) of the additional container (2) and which is provided with the moving partition (10) with one or several through openings (14), wherein these elements (6 and 7) are connected telescopically with each other.

4. A container for a liquid, which is under pressure, with an additional container (2) at the outlet (5) from the container (1), which has at least one end opening (3), wherein the mentioned additional container (2) is designed in the form of a working chamber with changing volumes,
**characterized in**
**that** the additional container (2) at the outlet (5) from the container (1) is split and consists of an immobilized element (6), which is connected directly to the container (1), or consists of an element (15) moving in the axial direction, which is arranged in the network at the outlet (5) from the container (1), with one or several through openings (14) and a moving element (16) following in the axial direction with one or several end openings (3), which interact with the mentioned immobilized element (6) or the mentioned moving element (15), wherein the mentioned elements (6, 15, 16) are connected telescopically with each other and
**that** at least another element (7) with one or several end openings (3) moving in the axial direction is connected to the last element (16).

5. A container for a liquid, which is under pressure, with an additional container (2) at the outlet (5) from the container (1), which has at least one end opening (3), wherein the mentioned additional container (2) is designed in the form of a working chamber with changing volumes,
**characterized in**
**that** the mentioned additional container (2) is split at the outlet (5) from the container (1) and consists of a moving or immobilized element (17), which is connected directly to the container (1) for the liquid,
**that** an element (15) moving in the axial direction is provided with one or several through openings (14) and a hollow, preferably mono-cell (9) moving in the axial direction connecting these elements (15, 17), which mono-cell has a moving connection with each of the mentioned elements (15, 17) of the additional container (2), wherein these elements (15, 17) are connected telescopically with each other and that at least another element (7) with one or several end openings (3) moving in the axial direction is connected to the last element (17).

6. A container for a liquid, which is under pressure, with an additional container (2) at the outlet (5) from the container (1), which has at least one end opening (3), wherein the mentioned additional container (2) is designed in the form of a working chamber with changing volumes,
**characterized in**
**that** the mentioned additional container (2) is split at the outlet (5) from the container (1) and consists of a moving or immobilized element (17), which is directly connected to the container (1) for the liquid, and an element (15) moving in the axial direction with one or several through openings (14), wherein these elements (15, 17) are telescopically connected with each other and
**that** at least another element (7) moving in the axial direction with one or several outlet openings (3) is connected to the last element (15) telescopically or with the aid of a cylinder element (8).

## Revendications

1. Procédé pour la modification opérationnelle de la résistance hydraulique d'un liquide à la sortie d'un récipient pour le liquide qui est mis sous pression :
- un récipient (2) supplémentaire étant mis en place à la sortie (5) du récipient (1), lequel, sous la forme d'une chambre de travail à volume variable, est muni d'un ou de plusieurs orifices d'obturation (3),
- le volume du récipient (2) supplémentaire étant modifié en fonction du volume du liquide contenu dans la chambre de travail du récipient (2) supplémentaire ou en fonction de la variation des paramètres physiques du processus ou conformément au programme appliqué,
**caractérisé en ce que**
le volume dudit récipient (2) supplémentaire est modifié au moyen d'éléments, mobiles dans le sens axial, du récipient supplémentaire, réalisé sous forme divisée selon l'une quelconque des présentes revendications 2 à 6, ledit volume est modifié, par exemple, au moyen d'une cloison (10) mobile, qui est disposée dans ledit récipient supplémentaire et qui est déplacée dans le sens axial.

2. Récipient pour un liquide qui est mis sous pression, comportant un récipient (2) supplémentaire à la sortie (5) du récipient (1), lequel comporte au moins un orifice d'obturation (3), ledit récipient (2) supplémentaire étant réalisé sous la forme d'une chambre de travail à volume variable,
**caractérisé**
**en ce que** ledit récipient (2) supplémentaire à la sortie (5) du récipient (1) est divisé et est constitué d'un élément (6) immobile qui est raccordé directement au récipient (1) pour le liquide,
**en ce qu'**il est prévu un élément (7) mobile dans le sens axial avec un ou plusieurs orifices d'obturation (3) et de préférence une monocellule (9) creuse, qui relie lesdits éléments (6, 7) et qui comporte une liaison mobile avec l'un des éléments (6, 7) évoqués du récipient (2) supplémentaire, lesdits éléments (6, 7) étant reliés entre eux de manière télescopique.

3. Récipient pour un liquide qui est mis sous pression, comportant un récipient (2) supplémentaire à la sortie (5) du récipient (1), lequel comporte au moins un orifice d'obturation (3), ledit récipient (2) supplémentaire étant réalisé sous la forme d'une chambre de travail à volume variable,
**caractérisé**
**en ce que** ledit récipient (2) supplémentaire à la sortie (5) du récipient (1) est divisé et est constitué d'un élément (6) immobile qui est raccordé directement au récipient (1) pour le liquide,
**en ce qu'**il est prévu un élément (7) mobile dans le sens axial avec un ou plusieurs orifices d'obturation (3), qui sont réalisés dans une cloison (10) et sont disposés dans cet élément (7), et
**en ce qu'**il est prévu de préférence une monocellule (12) creuse, mobile dans le sens axial, qui relie lesdits éléments et qui comporte une liaison mobile avec chacun des éléments (6 et 7) évoqués du récipient (2) supplémentaire et qui est munie de la cloison (10) mobile munie d'une ou de plusieurs ouvertures de passage (14), lesdits éléments (6 et 7) étant reliés entre eux de manière télescopique.

4. Récipient pour un liquide qui est mis sous pression, comportant un récipient (2) supplémentaire à la sortie (5) du récipient (1), lequel comporte au moins un orifice d'obturation (3), ledit récipient (2) supplémentaire étant réalisé sous la forme d'une chambre de travail à volume variable,
**caractérisé**
**en ce que** ledit récipient (2) supplémentaire à la sortie (5) du récipient (1) est divisé et est constitué d'un élément (6) immobile qui est raccordé directement au récipient (1), ou est constitué d'un élément (15) mobile dans le sens axial, qui est disposé dans le réseau à la sortie (5) du récipient (1) et est muni d'une ou de plusieurs ouvertures de passage (14) et d'un élément (16) consécutif, mobile dans le sens axial, qui est muni d'un ou de plusieurs orifices d'obturation (3) et qui coopère avec ledit élément (6) immobile ou ledit élément (15) mobile, lesdits éléments (6, 15, 16) étant reliés entre eux de manière télescopique, et
**en ce que**, en outre, au moins encore un élément (7), mobile dans le sens axial et muni d'un ou de plusieurs orifices d'obturation (3), est raccordé au dernier élément (16).

5. Récipient pour un liquide qui est mis sous pression, comportant un récipient (2) supplémentaire à la sortie (5) du récipient (1), lequel comporte au moins un orifice d'obturation (3), ledit récipient (2) supplémentaire étant réalisé sous la forme d'une chambre de travail à volume variable,
**caractérisé**
**en ce que** ledit récipient (2) supplémentaire à la sortie (5) du récipient (1) est divisé et est constitué d'un élément (17) mobile ou immobile qui est raccordé directement au récipient (1) pour le liquide,
**en ce qu'**il est prévu un élément (15) mobile dans le sens axial avec une ou plusieurs ouvertures de passage (14) et de préférence une monocellule (9) creuse, mobile dans le sens axial, qui relie lesdits éléments (15, 17) et qui comporte une liaison mobile avec chacun des éléments (15, 17) évoqués du récipient (2) supplémentaire, lesdits éléments (15, 17) étant reliés entre eux de manière télescopique, et
**en ce qu'**au moins encore un élément (7), mobile dans le sens axial et muni d'un ou de plusieurs orifices d'obturation (3), est raccordé au dernier élément (17).

6. Récipient pour un liquide qui est mis sous pression, comportant un récipient (2) supplémentaire à la sortie (5) du récipient (1), lequel comporte au moins un orifice d'obturation (3), ledit récipient (2) supplémentaire étant réalisé sous la forme d'une chambre de travail à volume variable,
**caractérisé**
**en ce que** ledit récipient (2) supplémentaire à la sortie (5) du récipient (1) est divisé et est constitué d'un élément (17) mobile ou immobile, qui est raccordé directement au récipient (1) pour le liquide, et d'un élément (15) mobile dans le sens axial avec une ou plusieurs ouvertures de passage (14), lesdits éléments (15, 17) étant reliés entre eux de manière télescopique, et
**en ce qu'**au moins encore un élément (7), mobile dans le sens axial et muni d'un ou de plusieurs orifices d'obturation (3), est raccordé au dernier élément (15) de manière télescopique ou à l'aide d'un élément de vérin (8).
